**Europäisches Patentamt**

**European Patent Office**

**Office européen des brevets**

(19)

(11) **EP 1 363 233 A1**

(12) **EUROPÄISCHE PATENTANMELDUNG**

| | |
|---|---|
| (43) Veröffentlichungstag:<br>**19.11.2003  Patentblatt 2003/47** | (51) Int Cl.⁷: $G06K\ 19/067$ |

(21) Anmeldenummer: **02010143.2**

(22) Anmeldetag: **13.05.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Orell Füssli Sicherheitsdruck AG
8036 Zürich (CH)**

(72) Erfinder: **Eichenberger, Martin
8702 Zollikon (CH)**

(74) Vertreter: **Blum, Rudolf Emil Ernst et al
c/o E. Blum & Co
Patentanwälte
Vorderberg 11
8044 Zürich (CH)**

(54) **Sicherheitsdokument mit Schwingkreis**

(57)    Eine Banknote oder ein anderes Sicherheitsdokument besitzt einen Träger (1), auf welchem unter anderem ein elektrischer Schwingkreis (5) angeordnet ist. Dieser erlaubt eine Verifikation der Sicherheitsdokuments. Er kann auch verwendet werden, um Informationen zu speichern. Vorzugsweise wird er drucktechnisch hergestellt.

Fig. 1

EP 1 363 233 A1

**Beschreibung**

Die Erfindung betrifft ein Sicherheitsdokument gemäss Oberbegriff von Anspruch 1, sowie ein Verfahren zur Kodierung von Information in einem derartigen Sicherheitsdokument und ein Verfahren zu dessen Herstellung.

Sicherheitsdokumente wie z.B. Banknoten, Checks, Wertpapiere, Pässe, Identitätskarten, Kreditkarten oder Bankkarten, werden regelmässig mit Merkmalen versehen, die deren Fälschung erschweren. Bekannt sind z.B. Sicherheitsdruck-Merkmale, Mikroperforierungen, Hologramme oder eingelegte Metallfäden.

Aufgabe der vorliegenden Erfindung ist es, ein weiteres Sicherheitsmerkmal für ein Sicherheitsdokument der eingangs genannten Art bereitzustellen.

Diese Aufgabe wird durch das Sicherheitsdokument gemäss Anspruch 1 gelöst.

Erfindungsgemäss ist das Sicherheitsdokument also mit einem elektrischen Schwingkreis ausgestattet. Dieser kann durch ein angelegtes elektromagnetisches Wechselfeld zu einer resonanten Schwingung angeregt werden, wenn die Feldfrequenz ungefähr der Resonanzfrequenz des Schwingkreises entspricht. Dies erlaubt es, den Schwingkreis berührungslos zu detektieren.

Vorzugsweise besteht der Schwingkreis mindestens teilweise aus elektrisch leitendem, druckbarem Material, was eine drucktechnische Herstellung erlaubt.

In einer ersten bevorzugten Ausführung ist das Sicherheitsdokument eine Banknote.

In einer anderen bevorzugten Ausführung weist das Sicherheitsdokument mehrere Blätter auf, die in einem Einband gebunden sind, wie dies z.B. bei Pässen üblich ist. Wird der Schwingkreis im oder am Einband angeordnet, so ist er mechanisch besser geschützt, insbesondere wenn der Einband aus einem biegefesteren Material als die Blätter besteht.

Es können auch mehrere Schwingkreise unterschiedlicher Resonanzfrequenz vorgesehen sein, was die Fälschungssicherheit erhöht. In diesem Fall kann auch die Differenzfrequenz zwischen den Resonanzfrequenzen der Schwingkreise gemessen werden.

Es kann auch ein ganzer Satz von Banknoten mit Schwingkreisen ausgestattet werden. In diesem Fall kann die Resonanzfrequenz und/oder die Anordnung des Schwingkreises abhängig vom Wert der jeweiligen Banknote ausgewählt werden. Das Sicherheitsdokument kann jedoch z.B. auch als Pass oder Identitätskarte ausgestaltet werden.

Wie bereits für Banknoten erwähnt, kann über die gewählte Resonanzfrequenz und/oder die Anordnung des Schwingkreises auch eine Information im Sicherheitsdokument kodiert werden. Vorzugsweise wird die Resonanzfrequenz abhängig von einer weiteren Information gewählt, wobei die weitere Information in geeigneter Form (z.B. kodiert oder in Klartext) auf dem Sicherheitsdokument angebracht wird. In diesem Falle kann durch Vergleich der Informationen eine Echtheitsprüfung des Sicherheitsdokuments durchgeführt werden.

Weitere bevorzugte Ausführungen und Anwendungen der Erfindung ergeben sich aus den abhängigen Ansprüchen sowie aus der nun folgenden Beschreibung bevorzugter Ausführungen anhand der Figuren. Dabei zeigen:

Fig. 1     eine Banknote mit zwei Schwingkreisen,
Fig. 2     einen Schnitt entlang Linie II-II von Fig. 1,
Fig. 3     einen Pass mit einem Schwingkreis,
Fig. 4     eine weitere Ausführung und
Fig. 5     einen Schnitt entlang Linie V-V von Fig. 4.

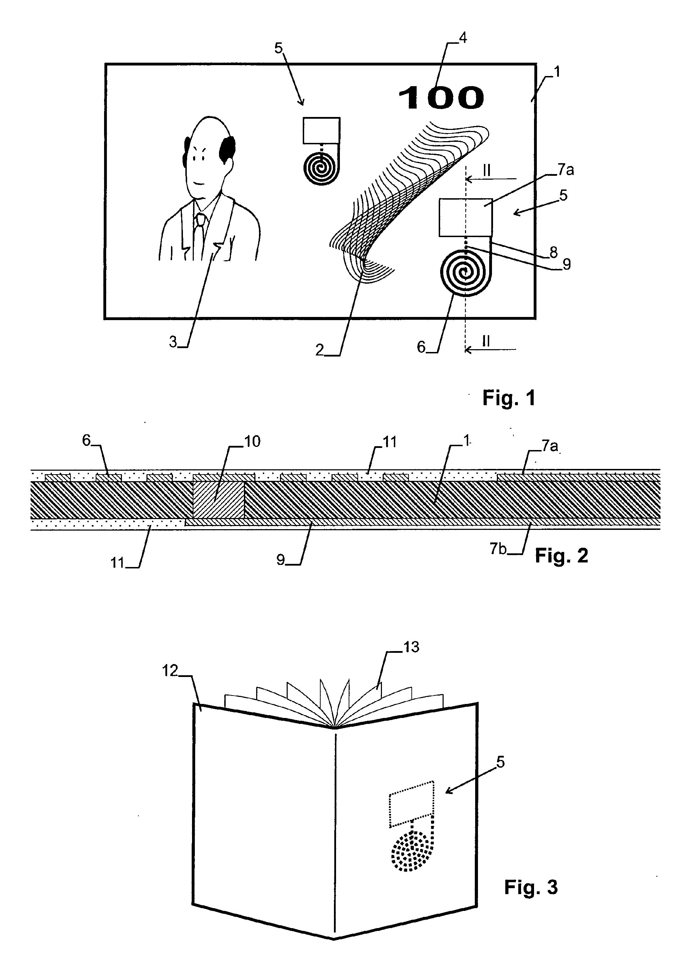

Die Banknote gemäss Fig. 1 besitzt einen Träger 1 aus Papier oder flexiblem Kunststoff, der beidseitig bedruckt ist. Im vorliegenden Beispiel wurden auf der Banknote konventionelle grafische Elementen 2, 3 und eine Wertangabe 4 aufgedruckt. Zudem sind auf der Banknote zwei Schwingkreise 5 angeordnet.

Der Aufbau der Schwingkreise 5 ist aus Fig. 1 und 2 ersichtlich. Jeder Schwingkreis umfasst eine Induktivität L bestehend aus einer spiralförmigen Spule 6 und einem Kondensator C mit zwei Elektroden 7a, 7b auf gegenüberliegenden Seiten des elektrisch isolierenden Trägers 1. Induktivität L und Kondensator C sind über Verbindungsleitungen 8, 9 zu einem Stromkreis geschlossen. Verbindungsleitung 8 befindet sich auf der gleichen Seite von Träger 1 wie Spule 6 und Elektrode 7a. Verbindungsleitung 9 ist zusammen mit Elektrode 7b auf der gegenüberliegenden Seite des Trägers 1 angeordnet. Zur Verbindung zwischen Spule 6 und Verbindungsleitung 9 ist mindestens eine Durckkontaktierung 10 vorgesehen, die sich durch Träger 1 erstreckt. Wie aus Fig. 2 ersichtlich, können die Spule 6, die Elektroden 7a, 7b und die Verbindungsleitungen 8, 9 durch Schutzschichten 11, z.B. aus transparentem oder nicht transparentem Kunststoff, geschützt sein.

Die Induktivität L und der Kondensator C bilden zusammen einen Schwingkreis mit Resonanzfrequenz

$$ f = \frac{1}{2\pi\sqrt{L \cdot C}}. $$

Wird die Banknote in ein elektromagnetisches Wechselfeld mit Frequenz f gebracht, so wird der Schwingkreis in Resonanz zu einer Schwingung angeregt, welche detektiert werden kann. Entsprechende Detektionsschaltungen sind aus der Diebstahlsicherung bekannt und brauchen hier nicht im Einzelnen beschrieben zu werden.

Wie aus Fig. 1 ersichtlich, sind auf dem dargestellten Ausführungsbeispiel zwei Schwingkreise 5 unterschiedlicher Grösse und somit unterschiedlicher Resonanzfrequenz angebracht. Dies erlaubt es, die Fälschungssicherheit des Dokuments zu erhöhen. Es ist auch denkbar, mehrere Schwingkreise 5 gleicher Frequenz auf dem Dokument anzuordnen. Dadurch wird die Zuverlässigkeit erhöht, da auch bei Beschädigung eines Schwingkreises noch eine Resonanz detektiert werden kann.

Vorzugsweise werden Noten von unterschiedlichem Wert mit Schwingkreisen unterschiedlicher Resonanzfrequenz ausgestattet. Dies erlaubt eine Bestimmung des Notenwerts über die Resonanzfrequenz und erhöht die Fälschungssicherheit. Es ist auch denkbar, Noten unterschiedlicher Herkunftsstaaten aufgrund der Resonanzfrequenz ihres Schwingkreises bzw. ihrer Schwingkreise zu unterscheiden. Durch die Wahl der Resonanzfrequenz des Schwingkreises bzw. der Schwingkreise kann also eine Information kodiert werden. Dabei kann es sich (wie im Beispiel des Notenwerts) um eine Information handeln, welche in Beziehung steht zu einer weiteren Information, die auf den Sicherheitsdokument aufgedruckt oder in anderer Weise am Sicherheitsdokument angeordnet ist. Dies erlaubt eine Verifikation der Echtheit des Dokuments durch Vergleich der Informationen. Anstelle oder zusätzlich zur Kodierung von Information über die Resonanzfrequenz kann Information auch über die Anordnung der Schwingkreise auf dem Dokument gespeichert werden.

In der Ausführung nach Fig. 1 sind die Schwingkreise 5 von aussen sichtbar und können bei einer visuellen Echtheitsprüfung berücksichtigt werden. Sie können auch als Design-Elemente verwendet werden.

Die Schwingkreise 5 können jedoch auch von einer nicht transparenten Schicht 11 bedeckt und somit unsichtbar sein. Sie können auch im Träger 1 angeordnet werden anstatt auf dessen Oberflächen.

Fig. 1 und 2 zeigen nur eine mögliche Ausgestaltungen der Schwingkreise. Aus dem Bereich der Diebstahlsicherungen sind eine Vielzahl von Geometrien für laminierte elektrische Schwingkreise bekannt, die für den vorliegenden Zweck eingesetzt werden können.

Die Schwingkreise 5 können durch Aufbringen elektrisch leitender Druckfarbe, d.h. eines durch Drucktechnik aufbringbaren Materials, z.B. mittels Siebdruck hergestellt werden. Zur Herstellung der Durchkontaktierung 10 können vor dem Aufbringen der elektrisch leitenden Druckfarbe ein oder mehrere Löcher im Substrat 1 hergestellt werden, z.B. mittels Laserstrahlen. Diese können sodann mit elektrisch leitender Druckfarbe oder einem anderen elektrischen Leiter gefüllt werden.

Es ist allerdings auch denkbar, die Schwingkreise oder Teile davon herzustellen indem in anderer Weise leitende Strukturen, z.B. in Form von Beschichtungen oder Folien, auf den Träger 1 aufgebracht oder in den Träger 1 eingebracht werden. Weiter ist es möglich, den Schwingkreis separat von der Banknote vorzufertigen und sodann auf dieser zu befestigen.

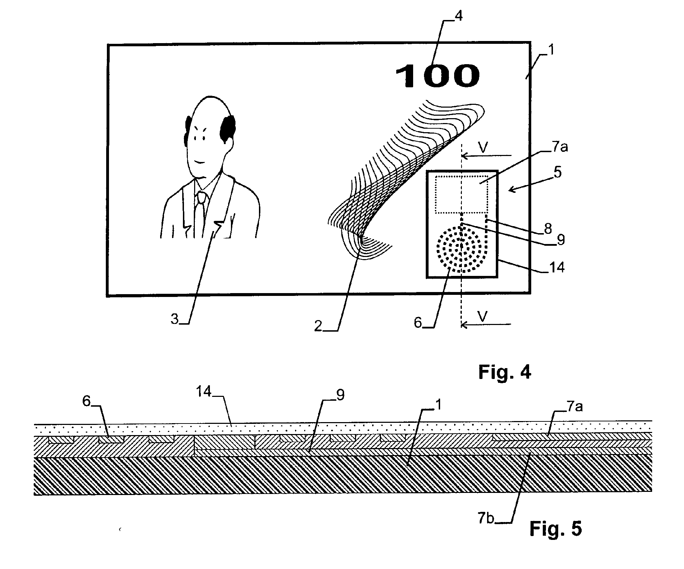

Ein Beispiel dieser Art ist in Fig. 4 und 5 dargestellt. Hier wurde ein Schwingkreis auf der Rückseite eines "Optisch Variablen Devices" (OVD) 14 angeordnet, welcher auf seiner Vorderseite ein Hologramm oder Kinegramm trägt (nicht dargestellt), dessen Sujet z.B. sich abhängig vom Betrachtungswinkel ändert. Indem der Schwingkreis auf der Rückseite eines Substrats angeordnet wird, dessen Vorderseite eine optisch sichtbare Sicherheitsmarkierung aufweist, und das Substrat sodann auf das Sicherheitsdokument aufgebracht wird, können mit einem Arbeitsschritt zwei Sicherheitsmerkmale (OVD und Schwingkreis) auf das Dokument appliziert werden.

Die Markierung mittels Schwingkreisen eignet sich für alle Sicherheitsdokumente, wie z.B. Wertpapiere, Urkunden oder Pässe. Zudem eignet sie sich auch zur Anordnung in Plastikkarten, wie z.B. Identitätskarten oder Kreditkarten.

Fig. 3 zeigt einen Pass mit einem biegefesten Einband 12 und mehreren im Einband 12 gebundenen Blättern 13. Wie schematisch angedeutet, wird der Schwingkreis in diesem Falle vorzugsweise im Einband 12 angeordnet, da er dort am besten vor Beschädigung geschützt ist. Auch hier können mehrere Schwingkreise vorgesehen werden und/oder die Resonanzfrequenz des Schwingkreises kann z.B. in Verbindung zum Ausstellungsland, zur Passnummer und/oder zu individuellen Daten des Passinhabers stehen.

Es ist auch denkbar, einen Schwingkreis auf der "Personalisierungsseite" des Passes anzubringen, d.h. derjenigen Seite, die die individualisierten Daten seines Besitzers enthält.

**Patentansprüche**

1. Sicherheitsdokument **dadurch gekennzeichnet, dass** es einen durch ein angelegtes elektromagnetisches Feld anregbaren elektrischen Schwingkreis (5) aufweist.

2. Sicherheitsdokument nach Anspruch 1, wobei der Schwingkreis (5) einen Kondensator (C) aufweist, der mindestens zwei von leitenden Schichten gebildete Elektroden (7a, 7b) aufweist, wobei die Elektroden durch eine nicht leitende Schicht (1) getrennt sind.

3. Sicherheitsdokument nach einem der vorangehenden Ansprüche, wobei das Sicherheitsdokument einen bedruckten Träger (1) aus Papier oder flexiblem Kunststoff aufweist.

4. Sicherheitsdokument nach den Ansprüchen 2 und 3, wobei die Elektroden (7a, 7b) auf gegenüberliegenden Seiten des Trägers (1) angeordnet sind.

5. Sicherheitsdokument nach einem der vorangehenden Ansprüche, wobei der Schwingkreis (5) mindestens teilweise aus elektrisch leitendem, druckbarem Material besteht.

**6.** Sicherheitsdokument nach einem der vorangehenden Ansprüche, wobei mindestens ein Teil des Schwingkreises (5) von aussen sichtbar ist.

**7.** Sicherheitsdokument nach einem der vorangehenden Ansprüche, wobei das Sicherheitsdokument mehrere Blätter (13) aufweist, die in einem Einband (12) gebunden sind, wobei der Schwingkreis (5) im oder am Einband (12) angeordnet ist, und insbesondere wobei der Einband (12) aus einem biegefesteren Material als die Blätter (13) besteht.

**8.** Sicherheitsdokument nach einem der vorangehenden Ansprüche, welches mehrere Schwingkreise (5) mit unterschiedlicher Resonanzfrequenz aufweist.

**9.** Sicherheitsdokument nach einem der vorangehenden Ansprüche, wobei der Schwingkreis (5) eine sich durch das Sicherheitsdokument erstreckende Durchkontaktierung (10) aufweist.

**10.** Sicherheitsdokument nach einem der vorangehenden Ansprüche, wobei der Schwingkreis eine spiralförmige Spule (6) aufweist.

**11.** Sicherheitsdokument nach einem der vorangehenden Ansprüche, welches als Banknote ausgestaltet ist.

**12.** Sicherheitsdokument nach einem der vorangehenden Ansprüche, welches als Pass oder Identitätskarte ausgestaltet ist.

**13.** Sicherheitsdokument nach einem der vorangehenden Ansprüche, wobei der Schwingkreis (5) auf der Rücksseite eines Substrats (14) angeordnet ist, wobei auf der Vordersseite des Substrats (14) eine optische Sicherheitsmarkierung angeordnet ist, und wobei das Substrat auf dem Sicherheitsdokument befestigt ist.

**14.** Satz von Banknoten mit unterschiedlichen Werten aus Sicherheitsdokumenten nach einem der Ansprüche 1 bis 11, wobei unterschiedlichen Werten Schwingkreise (5) unterschiedlicher Resonanzfrequenz zugeordnet sind.

**15.** Verfahren zur Kodierung von Information in einem Sicherheitsdokument nach einem der Ansprüche 1 bis 13, wobei die zu kodierende Information die Resonanzfrequenz bzw. Resonanzfrequenzen und/oder die Anordnung des Schwingkreises bzw. der Schwingkreise (5) bestimmt.

**16.** Verfahren nach Anspruch 15, wobei die in der Resonanzfrequenz oder Anordnung kodierte Information in Beziehung zu einer weiteren, auf dem Sicherheitsdokument angeordneten oder kodierten Information (4) steht, derart, dass die in der Resonanzfrequenz kodierte Information und die weitere Information zur Verifikation des Sicherheitsdokuments miteinander verglichen werden können.

**17.** Verfahren zum Herstellen eines Sicherheitsdokuments nach einem der Ansprüche 1 bis 13, **dadurch gekennzeichnet, dass** der Schwingkreis (5) mindestens teilweise drucktechnisch auf das Dokument aufgebracht wird.

**18.** Verfahren nach Anspruch 17, wobei der Schwingkreis (5) eine sich durch das Dokument erstreckende Durchkontaktierung (10) aufweist, wobei die Durchkontaktierung (10) hergestellt wird, indem im Sicherheitsdokument mittels Laserstrahl eine Öffnung erzeugt wird und ein Leiter in die Öffnung eingebracht wird.

**100**

**Fig. 1**

**Fig. 2**

**Fig. 3**

**Fig. 4**

**Fig. 5**

Europäisches Patentamt

**EUROPÄISCHER RECHERCHENBERICHT**

Nummer der Anmeldung

EP 02 01 0143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 757 521 A (SHEA RICHARD C ET AL) 26. Mai 1998 (1998-05-26) | 1-6,8, 12,13, 15-17 | G06K19/067 |
| Y | * Spalte 8, Zeile 49 - Spalte 9, Zeile 16 * | 7 | |
| | --- | | |
| X | EP 1 179 811 A (EUROP CENTRAL BANK) 13. Februar 2002 (2002-02-13) | 1-3,5,6, 10,11 | |
| A | * Absatz '0043! - Absatz '0051! * | 4,7-9 | |
| | --- | | |
| Y | US 5 528 222 A (COTEUS PAUL W ET AL) 18. Juni 1996 (1996-06-18) * Spalte 6, Zeile 58 - Spalte 7, Zeile 5 * | 7 | |
| | --- | | |
| A | EP 1 134 694 A (INFINEON TECHNOLOGIES AG) 19. September 2001 (2001-09-19) * Absatz '0011! * | 1,15,18 | |
| | ----- | | |

**RECHERCHIERTE SACHGEBIETE (Int.Cl.7)**

G06K

Der vorliegende Recherchenbericht wurde für alle Patentansprüche erstellt

| Recherchenort | Abschlußdatum der Recherche | Prüfer |
|---|---|---|
| DEN HAAG | 11. Oktober 2002 | Goossens, A |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 01 0143

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5757521 | A | 26-05-1998 | US | 5786910 A | 28-07-1998 |
| | | | WO | 9721184 A2 | 12-06-1997 |
| | | | DE | 69610632 D1 | 16-11-2000 |
| | | | DE | 69610632 T2 | 03-05-2001 |
| | | | EP | 0838067 A2 | 29-04-1998 |
| | | | WO | 9636010 A2 | 14-11-1996 |
| EP 1179811 | A | 13-02-2002 | EP | 1179810 A1 | 13-02-2002 |
| | | | EP | 1179811 A1 | 13-02-2002 |
| US 5528222 | A | 18-06-1996 | AT | 179270 T | 15-05-1999 |
| | | | CA | 2153441 A1 | 10-03-1996 |
| | | | CN | 1118910 A | 20-03-1996 |
| | | | DE | 69509242 D1 | 27-05-1999 |
| | | | DE | 69509242 T2 | 04-11-1999 |
| | | | WO | 9607985 A1 | 14-03-1996 |
| | | | EP | 0780007 A1 | 25-06-1997 |
| | | | EP | 0855675 A2 | 29-07-1998 |
| | | | HU | 76996 A2 | 28-01-1998 |
| | | | JP | 8088586 A | 02-04-1996 |
| | | | KR | 191975 B1 | 15-06-1999 |
| | | | PL | 318977 A1 | 21-07-1997 |
| | | | SG | 46938 A1 | 20-03-1998 |
| | | | ZA | 9507078 A | 11-03-1996 |
| EP 1134694 | A | 19-09-2001 | EP | 1134694 A1 | 19-09-2001 |
| | | | WO | 0169523 A1 | 20-09-2001 |

EPO FORM P0461

Für nähere Einzelheiten zu diesem Anhang : siehe Amtsblatt des Europäischen Patentamts, Nr. 12/82